# EUROPEAN PATENT SPECIFICATION

(11) **EP 4 512 764 B1**
(45) Date of publication and mention of the grant of the patent: **01.10.2025**
(21) Application number: 24195216.7
(22) Date of filing: 19.08.2024
(51) Int. Cl.: B66D 3/10

(54) **ARBORIST BLOCK**
BAUMSTÄLLBLOCK
BLOC ARBORISTE

(30) Priority: 22.08.2023 US 202363578064 P; 15.08.2024 US 202418805720
(43) Date of publication of application: 26.02.2025
(73) Proprietor: Harken, Incorporated, Pewaukee, Wisconsin 53072 (US)
(72) Inventor: Siemer, Jr, Richard H, Pewaukee, WI 53072 (US); Warmenhoven, Erik M, Pewaukee, WI 53072 (US)
(74) Representative: Barker Brettell LLP

(56) References cited:
- US-A- 5 511 447

## Description

### CROSS-REFERENCE TO RELATED APPLICATIONS

This application claims the benefit of and priority to U.S. Provisional Patent Application No. 63/578,064 filed on August 22, 2023.

### FIELD OF THE INVENTION

The invention relates generally to the field of rope-based activities. More particularly, the invention relates to devices used by arborists to manage loads suspended by ropes.

### BACKGROUND OF THE INVENTION

A conventional arborist block or pulley is used in the field of arborism for negative rigging techniques. In this technique, instead of felling a tree from the ground, the standing tree is limbed, then the main stem is removed in pieces from the top down. This is done in situations where felling the tree from the ground is not feasible. The preparation for negative rigging requires that a block is anchored to the main stem of the tree just below the location where the arborist wants to cut a section of the main stem. A rope usually is tied off on the section of main stem to be removed, then it runs through the pulley anchored below the cut location, then it continues down to a friction device that is anchored to the base of the tree then the rope is handled by a groundsman.

In operation, the arborist cuts the section of main stem until it starts to fall. Using the rope, the groundsman catches the falling section of main stem and controls its descent to the ground by virtue of the rope travelling through the friction device. This allows the groundsman to control a load that exceeds their own weight. As the pulley is free to rotate the groundsman can use it to lift the cut portion of the tree higher if needed. Unfortunately, this also means that if the cut portion of the tree is too heavy (e.g., the desired cut section is too large), the groundsman may not be able to safely handle the load. In such cases, it would be beneficial to add more friction to the system. When a load is expected to be too heavy for the groundsman to safely handle, a large rigging ring can be substituted for the arborist block. Because the surface that the rope moves along inside the rigging ring is fixed and does not move, friction must be overcome for the rope to move along the rigging ring, which allows a larger section of main stem to be cut off by the arborist or a lighter groundsman to safely handle the rope. Therefore, an Arborist requires multiple devices to perform these different functions. As such, there is a need for an improved arborist block that can safely and selectively perform both functions. US 5 511 447 A discloses the preamble of claim 1.

### BRIEF SUMMARY OF THE INVENTION

In at least some embodiments, the invention relates to an arborist block that includes a front plate and a back plate; a sheave rotatably coupled to a sheave axle secured between the front plate and back plate; and a plurality of sheave locks situated in respective sheave lock tracks and radially extendable into a plurality of lock receiving recesses in the sheave to prevent rotation of the sheave relative to the sheave axle.

In at least yet some embodiments, the invention relates to an arborist block that includes a front plate having a plurality of sheave lock tracks extending radially and a ring boss; a back plate; a sheave axle secured between the front plate and the back plate; a sheave rotatably coupled to the sheave axle, the sheave including a plurality of lock receiving recesses positioned circumferentially therearound; a translatable sheave lock switch coupled to a sheave lock rod; a rotatable ring drive coupled to the sheave lock rod; and a plurality of drive links coupled respectively to a plurality of sheave locks positioned respectively in a plurality of sheave lock tracks, wherein translation of the sheave lock switch provides outward radial translation of the plurality of sheave locks into the plurality of lock receiving recesses to prevent rotation of the sheave relative to the front plate.

Other embodiments, aspects, and features of the invention will be understood and appreciated upon a full reading of the detailed description and the claims that follow.

### BRIEF DESCRIPTION OF THE DRAWINGS

Embodiments of the invention are disclosed with reference to the accompanying drawings and are for illustrative purposes only. The invention is not limited in its application to the details of construction or the arrangement of the components illustrated in the drawings. The invention is capable of other embodiments or of being practiced or carried out in other various ways. In the drawings:
FIG. 1 is a front perspective view of an exemplary embodiment of an arborist block;
FIG. 2 is a rear perspective view of the arborist block of FIG. 1;
FIG. 3 is a front exploded view of the arborist block of FIG. 1;
FIG. 4 is a rear exploded view of the arborist block of FIG. 1;
FIG. 5 is a first perspective view of a back plate of the arborist block of FIG. 1;
FIG. 6 is a second perspective view of the back plate of FIG. 5;
FIG. 7 is a front view of a sheave of the arborist block of FIG. 1;
FIG. 8 is a perspective view of the sheave of FIG. 7;
FIG. 9 is a top view of the sheave of FIG. 7;
FIG. 10 is a rear view of the front plate of the arborist block of FIG. 1;
FIG. 11 is a perspective view of the front plate of FIG. 10;
FIG. 12 is a front view of a portion of the arborist block of FIG. 1 with the sheave lock switch shown in a locked position;
FIG. 13 is a front view of a portion the arborist block of FIG. 1 with the sheave lock switch shown in an unlocked position;
FIG. 14 is a front view of the arborist block of FIG. 1 shown in a locked state with the front plate removed for illustrative purposes;
FIG. 15 is a front view of the arborist block of FIG. 1 shown in an unlocked state with the front plate removed for illustrative purposes;
FIG. 16 is a first perspective view of the sheave lock of the arborist block of FIG. 1; and
FIG. 17 is a second perspective view of the sheave lock of FIG. 16.
FIG. 18 is a front perspective view of another exemplary embodiment of the arborist block;
FIG. 19 is a rear perspective view of the arborist block of FIG. 18;
FIG. 20 is a front view of the arborist block of FIG. 18;
FIG. 21 is a front perspective view of a front plate of the arborist block of FIG. 18;
FIG. 22 is a back perspective view of the front plate of the arborist block of FIG. 18; and
FIG. 23 is a front view of the arborist block of FIG. 18 shown in a locked state with the front plate removed for illustrative purposes.

### DETAILED DESCRIPTION

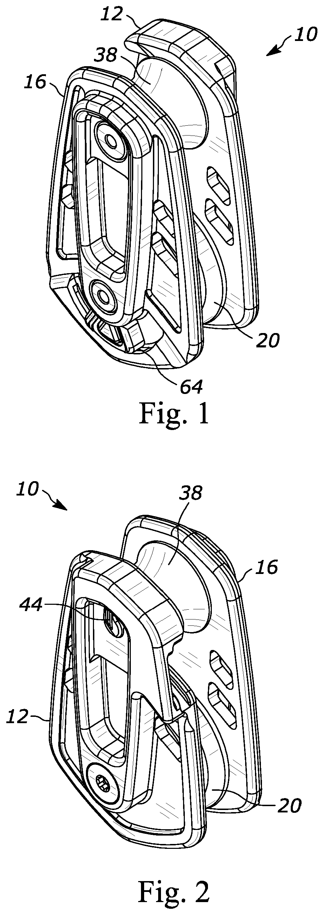

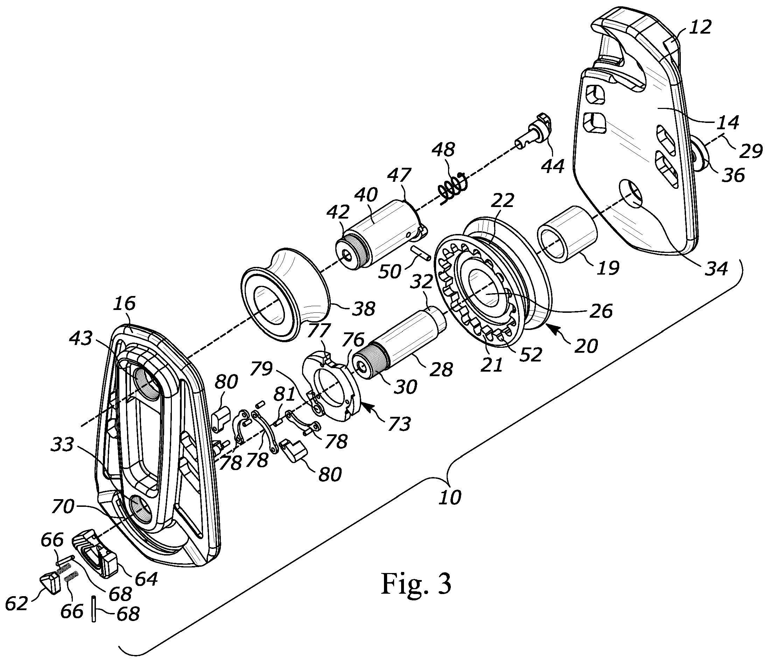

Referring to FIGS. 1-4, various perspective and exploded views of an exemplary embodiment of an arborist block 10 are provided. As shown, in at least some embodiments, the arborist block 10 includes a back plate 12 with a back plate inner surface 14, and a front plate 16 with a front plate inner surface 18, and a rotationally lockable sheave 20 secured therebetween that allows a user to manually place the sheave 20 in an unlocked state or a locked state to add frictional resistance. In at least some embodiments, the back plate inner surface 14 and front plate inner surface 18 are generally planar. The sheave 20 includes a sheave front wall 21 and a sheave rear wall 23, along with a generally U-shaped or V-shaped sheave central groove 22 therearound for receiving a rope (not shown) therein and a cylindrical sheave center passage 26. A cylindrical sheave axle 28 is secured between the back plate 12 and front plate 16 for receiving and supporting the sheave 20. A cylindrical bearing sleeve 19 can be provided between sheave axle 28 and the sheave 20.

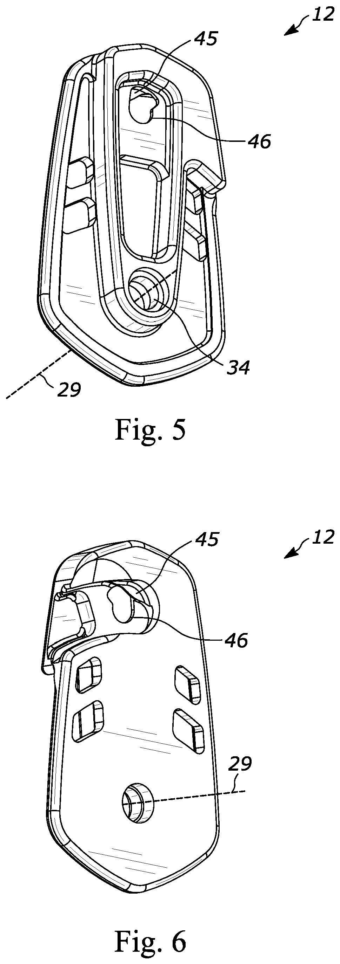

In at least some embodiments, the sheave axle 28 includes a sheave axle first end 30 configured to be coupled to the front plate 16, and a sheave axle second end 32 configured to be coupled to the back plate 12. The sheave axle 28 rotates about a sheave rotational axis 29 extending through the arborist block 10. In at least some embodiments, the sheave axle first end 30 or sheave axle second end 32 can include external threads to engage internal mating threads in a first sheave axle receiving aperture 33 in one of the plates 12, 16 with the other end being sized to engage a second sheave axle receiving aperture 34 in the other of the plates 12, 16 and be secured in place with an axle retention bolt 36, although in any embodiments, similar axle retention bolts can also be used in place of or in addition to a threaded engagement and vice-versa. The arborist block 10 can further include a rotatable thimble 38 secured by a thimble axle 40 between the back plate 12 and front plate 16, wherein the thimble axle 40 is situated above the sheave axle 28. The thimble axle 40 can further include a thimble axle first end 42 that can be threadably engaged with a thimble axle receiving aperture 43 in the front plate 16, similar to the sheave axle 28. A side plate lock switch 44 can be biasedly coupled to a thimble axle second end 47 with a side plate lock button spring 48 and an indexing pin 50. To rotationally release the back plate 12, the side plate lock switch 44 is rotated off a locking tab 45 (see FIGS. 5 and 6) and then pushed inward through a plate release aperture 46 formed in the back plate 12, which allows rotation of the back plate 12 relative to the front plate 16 about the sheave rotational axis 29, thereby providing an opening to release or insert a rope into the arborist block 10.

The sheave 20 is configured to be adjustable between a locked and unlocked state. When the sheave 20 is in an unlocked state, it can rotate freely about the sheave axle 28 in both rotational directions. When the sheave 20 is in a locked state, it is restricted from freely rotating in either direction, thereby acting as a friction device, much like a rigging ring. The mechanism for locking and unlocking the sheave 20 can take many forms.

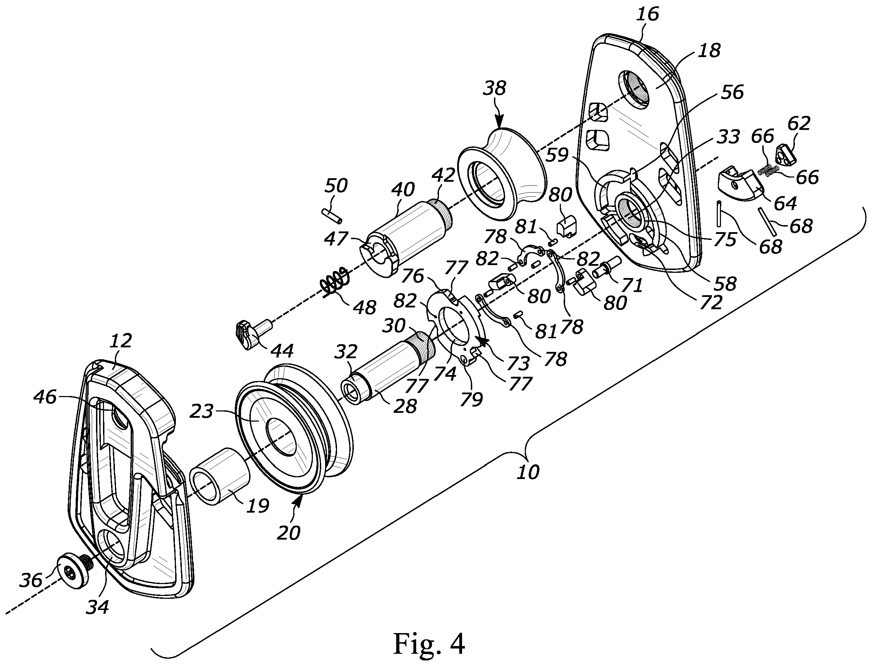

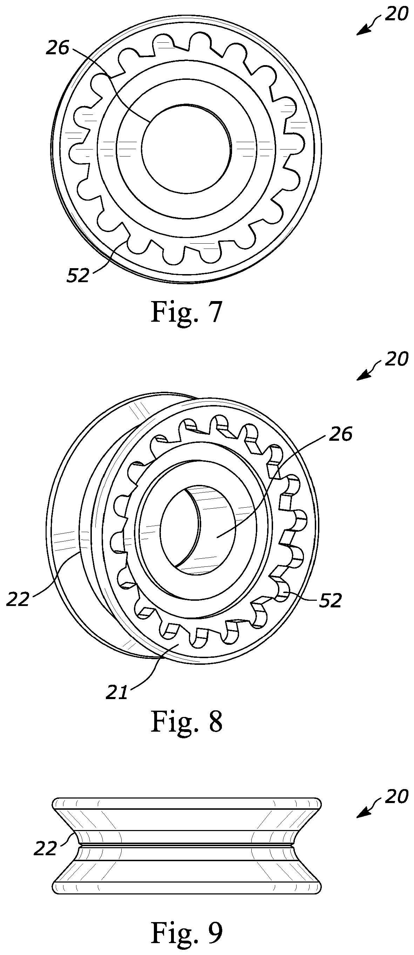

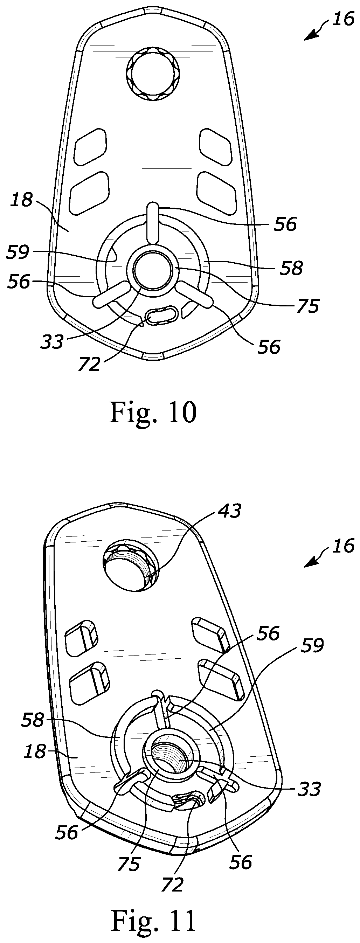

Referring to FIGS. 7-9 illustrating exemplary front, perspective, and top views of the sheave 20, in at least some embodiments, the sheave 20 includes a plurality of lock receiving recesses 52 spaced circumferentially and adjacent to the perimeter of the sheave front wall 21. These lock receiving recesses 52 can vary in shape, size, and quantity to achieve desired characteristics, such as holding strength, adjustability, etc., and are configured to be engaged to rotationally lock the sheave 20 in place. Various mechanisms can be used to engage the lock receiving recesses 52, although in at least some embodiments, as seen in at least FIGS. 4, 10, and 11, the front plate 16 can include a plurality of radially extending sheave lock tracks 56 (i.e., slots) that can be formed in or otherwise secured to the front plate 16. The sheave lock tracks 56 can vary in size and shape and generally serve as guides. A ring boss 58 can also integrally formed with or otherwise secured to the front plate 16, wherein the ring boss 58 can take many forms. In at least some embodiments, the ring boss 58 comprises a generally circular but segmented raised barrier (forming several arced portions) that at least partially encircles the sheave rotational axis 29, wherein the ring boss 58 is segmented to provide an opening at each of the sheave lock tracks 56, although other openings can be provided. The ring boss 58 includes an inner boss wall 59 that extends perpendicularly from the front plate inner surface 18. The height and thickness of the ring boss 58 can vary.

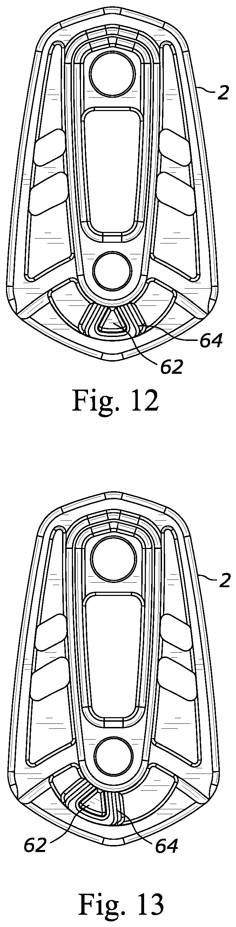

In at least some embodiments, to transition the sheave 20 from an unlocked state to a locked state, a sheave lock switch 64 including a sheave lock button 62 is provided, wherein depressing the sheave lock button 62 releases the sheave lock switch 64 and allows a user to translate the sheave lock switch 64 (e.g., move circumferentially counterclockwise). FIGS. 12 and 13 provide a front view of the arborist block 10 with the sheave lock switch 64 in respective locked and unlocked positions. In at least some embodiments, the sheave lock button 62 can be biased outwards using a plurality of springs 66. Further, in at least some embodiments, the sheave lock switch 64 includes sheave lock tracking pins 68 that engage a pin groove 70 to at least partially secure the sheave lock switch 64 to the front plate 16 and guide its rotation along the front plate 16 during locking and unlocking.

The arborist block 10 further includes a sheave lock rod 71 that passes through a plate slot 72 in the front plate 16, and is coupled to the sheave lock switch 64 at one end and coupled to a ring drive 73 at the other end, such that moving the sheave lock switch 64 causes the ring drive 73 to rotate in the same direction (e.g., counterclockwise or clockwise). In at least some embodiments, the sheave lock rod 71 engages an aperture 79 in the ring drive. In at least some embodiments, the ring drive 73 is include a circular center aperture 74 that can be rotatably situated over a circular ring mount 75 extending from the front plate inner surface 18 to fix rotation of the ring drive 73 about the sheave rotational axis 29. The ring drive 73 further includes a generally circular outer wall 76 having a plurality (e.g., three) of ramped notches 77 formed therealong.

When the sheave lock switch 64 is rotated causing the ring drive 73 to rotate, the ring drive 73 pushes in a generally circumferential direction one or more coupled (e.g., pivotably) drive links 78 (e.g., three, etc.), which in turn push one or more coupled (e.g., pivotably) sheave locks 80 radially outward into corresponding lock receiving recesses 52 in the sheave 20. The rotation of the sheave 20 is then prevented by the sheave locks 80 which during rotation of the ring drive 73 are slid radially outward along the radially extending sheave lock tracks 56 and into the lock receiving recesses 52.

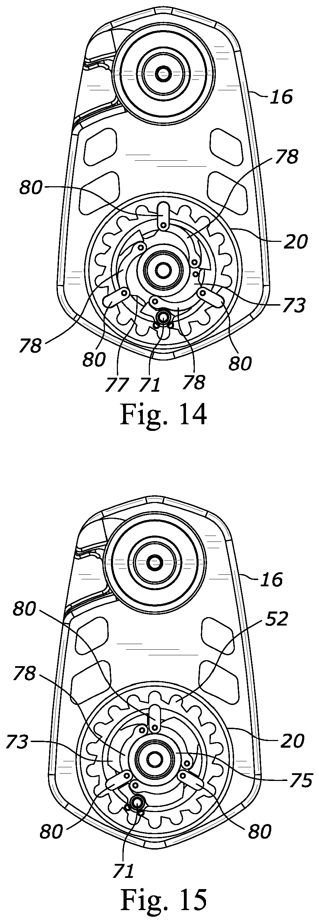

The segmented ring boss 58 provides a barrier that helps guide the drive links 78 as they move circumferentially. This locked state is best seen in FIG. 14, showing the arborist block 10 with the front plate 16 removed for illustrative purposes. In the locked state, since the sheave 20 cannot rotate, the arborist block 10 will provide additional friction to a rope passing over the sheave 20 (friction created by the rope sliding over the sheave central groove 22). In at least some embodiments, the drive links 78 are arc-shaped and ride inside and are guided by the inner boss wall 59 of the ring boss 58 as the ring drive 73 is rotated.

The coupling of various components discussed above is in at least some embodiments accomplished using pins (e.g., ring drive pins 81) that can for example be perpendicularly fixed between components using integral apertures (e.g., pin apertures 82) in the components to form a spaced moveable engagement that allows for rotation. Although various other coupling mechanisms can be utilized to provide similar function.

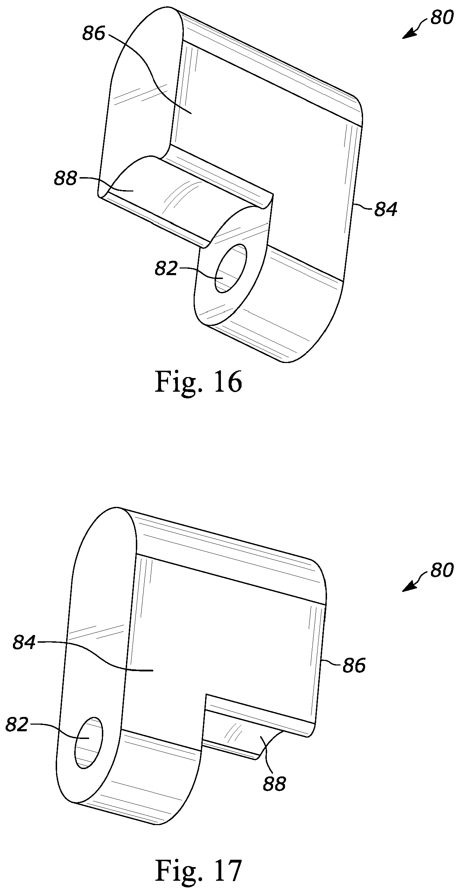

Referring to FIGS. 16 and 17, exemplary perspective views of the sheave lock 80 are provided. Although the sheave lock 80 can take various forms, in at least some embodiments, the sheave lock 80 includes a sheave lock front portion 84 sized and shaped to at least partially be matingly received in and in slidable engagement with the sheave lock tracks 56, and a sheave lock rear portion 86 sized and shaped to at least partially be matingly received in the lock receiving recesses 52 of the sheave 20. In addition, the sheave lock 80 can include a bottom portion 88 that is arced to provide clearance for the ring drive 73 to rotate thereunder.

To transition the sheave 20 from a locked state to an unlocked state, the sheave lock button 62 is depressed and the sheave lock switch 64 is translated (e.g., circumferentially clockwise). The sheave lock switch 64 rotates the sheave lock rod 71 and the ring drive 73 in the same direction (e.g., clockwise). The ring drive 73 circumferentially pulls the drive links 78, which in turn simultaneously pulls the interconnected sheave locks 80 radially inward and out of their respective lock receiving recesses 52 in the sheave 20. In this unlocked state the sheave locks 80 are positioned in the ramped notches 77 (best seen in FIG. 15, showing the arborist block 10 with the front plate 16 removed for illustrative purposes) allowing the sheave 20 to freely rotate in either direction so that rope passing over the sheave 20 will not experience additional frictional resistance. The unlocked state then allows the arborist block 10 to be used to easily to both hoist and lower tree members without the additional frictional resistance of a non-rotating sheave.

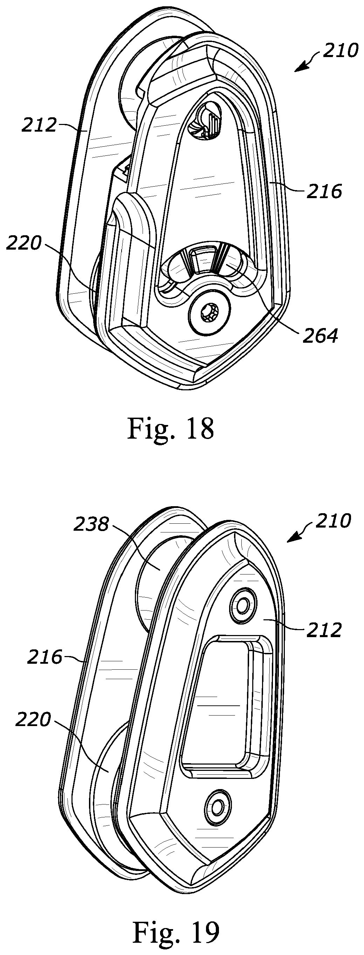

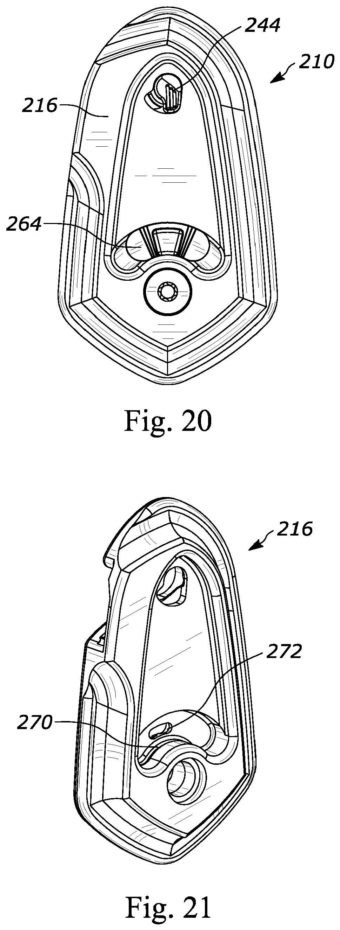

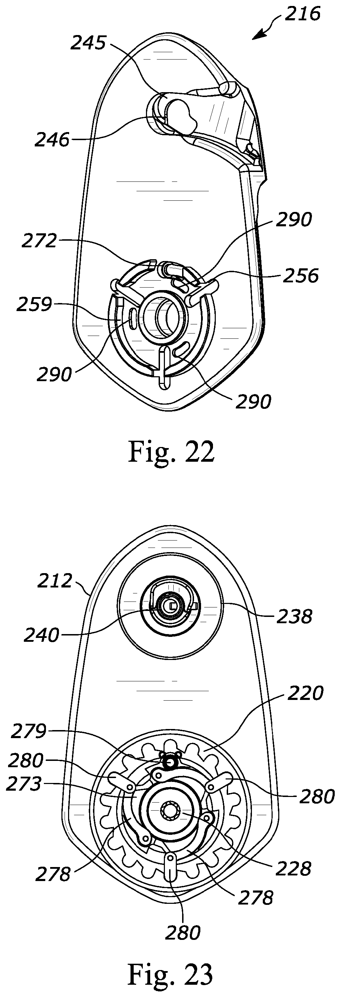

Various components of the arborist block 10 can be modified without limiting core functionality. For example, in at least some embodiments, the side plate lock switch 44 and can be altered to be operable about the front plate 16 rather than the back plate 12. This can be accomplished by turning the thimble axle 40 one-hundred eighty degrees and moving the side plate lock button spring 48 and indexing pin 50 along with it. The plate release aperture 46 and locking tab 45 would be moved from the back plate 12 to the front plate 16 to receive the side plate lock switch 44. The thimble axle first end 42 would be threadably engaged with the thimble axle receiving aperture 43, which is moved to the back plate 12. In addition, in at least some embodiments, the sheave lock switch 64 can be repositioned, such as above the first sheave axle receiving aperture 33, rather than below it. Such repositioning would move the pin groove 70 and plate slot 72 above the first sheave axle receiving aperture 33, while the ring boss 58, the sheave lock tracks 56, and the ring drive 73 would be rotated, with the aperture 79 positioned adjacent the plate slot 72 to engage the sheave lock rod 71. As the sheave lock rod 71 would still engage the aperture 79 in the ring drive 73, the sheave locking mechanism would function essentially the same from its new position. An illustration of such an exemplary embodiment is provided in various views in FIGS. 18-23, wherein for convenience, components in FIGS. 18-23 have been labeled using the same element numbers to their counterparts shown in FIGS. 1-17, but with a "2" prefix (e.g., 10, 210; 12, 212; etc.), as such, component 212 for example is a back plate, same as component 12; and component 264 is a sheave lock switch, same as component 64, etc. These components provide the same or substantially similar function, but are repositioned in the second embodiment as compared to the first embodiment. In addition, the embodiment shown in FIGS 18-23 can also include pin guides 290 formed as channels for guiding the ring drive pins 81 pivotably securing the drive links 78 to the ring drive 73.

Although the invention has been herein described in what is perceived to be the most practical and preferred embodiments, it is to be understood that the invention is not intended to be limited to the specific embodiments set forth above, but include modified forms of those embodiments including portions of the embodiments and combinations of elements of different embodiments as come within the scope of the following claims. And, although certain advantages of different embodiments and disadvantages of certain prior art are described, no single claim must realize every or any benefit or overcome every or any disadvantage. The term "plurality" as used herein shall be understood to include one or more.

## Claims

1. An arborist block (10) comprising:
a front plate (16) having a front plate inner surface (18);
a back plate (12) having a back plate inner surface (14);
a sheave (20) rotatably coupled to a sheave axle (28) secured between the front plate (16) and the back plate (12) and radially centered along a sheave rotational axis (29);
**characterized in that**
the arborist block further comprises a plurality of sheave locks (80) situated in respective sheave lock tracks (56) and radially extendable into a plurality of lock receiving recesses (52) in the sheave (20) to prevent rotation of the sheave (20) relative to the sheave axle (28).

2. The arborist block (10) of claim 1, further comprising a sheave lock switch (64) coupled to a rotatable ring drive (73) situated around the sheave axle (28).

3. The arborist block (10) of claim 2, further comprising a plurality of drive links (78) coupling the ring drive (73) to the plurality of sheave locks (80), wherein each one of the plurality of drive links (78) is coupled to a respective one of the plurality of sheave locks 80).

4. The arborist block (10) of any one of claim 2 or claim 3, wherein the ring drive (73) comprises a generally circular outer wall (76) having a plurality of ramped notches (77) formed therealong.

5. The arborist block (10) of any preceding claim , wherein the sheave (20) includes a sheave front wall (21) and a sheave back wall (23) and the plurality of lock receiving recesses (52) are spaced circumferentially and adjacent to the perimeter of the sheave front wall (21).

6. The arborist block (10) of any preceding claim, wherein the front plate (16) includes a ring boss (58) comprising a circular but segmented raised barrier that at least partially encircles the sheave rotational axis (29).

7. The arborist block (10) of claim 6, wherein the ring boss (58) includes an inner boss wall (59) that extends perpendicularly from the front plate inner surface (18).

8. The arborist block (10) of claim 7, wherein the plurality of drive links (78) are arc-shaped and ride inside and are guided by the inner boss wall (59) of the ring boss (58) as the ring drive (73) is rotated.

9. The arborist block (10) of any preceding claim, wherein each of the plurality of sheave locks (80) includes both a sheave lock front portion (84) that is matingly received in and in slidable engagement with a respective one of the sheave lock tracks (56), and a sheave lock rear portion (86) that is matingly received in a respective one of the plurality lock receiving recesses of the sheave (52).

10. The arborist block (10) of any preceding claim, wherein the sheave lock tracks (52) are integrally formed as slots in the front plate (16).

11. The arborist block (10) of any preceding claim, wherein the ring drive (73) further comprises a circular center aperture rotatably (74) situated over a circular ring mount (75) extending from the front plate inner surface (18) to fix rotation of the ring drive (73) about the sheave rotational axis (29).

12. The arborist block (10) of any one of claim 3 to claim 11 dependent directly or indirectly on claim 3, wherein the plurality of drive links (78) includes only three drive links and the plurality of sheave locks (80) includes only three sheave locks.

13. The arborist block (10) of any one of claim 3 to claim 12 dependent directly or indirectly on claim 3, wherein each of the plurality of drive links (78) includes pin apertures (82) for coupling each of the plurality of drive links (78) to the ring drive (73) and coupling each of the plurality of drive links (78) to respective sheave locks (80) using a plurality of coupling pins.

14. The arborist block (10) of any preceding claim, wherein each of the plurality of sheave locks (80) includes a bottom portion (88) that is arced to provide clearance for the ring drive (73) to rotate thereunder.

15. The arborist block (10) of any preceding claim, further comprising a rotatable thimble (38) secured by a thimble axle (40) between the back plate (12) and the front plate (16), wherein the thimble axle (40) is situated above the sheave axle (28), and wherein the thimble axle (40) is releasably secured.

## Patentansprüche

1. Baumpfleger-Seilrolle (10), umfassend:
eine Frontplatte (16), die eine Frontplatten-Innenfläche (18) aufweist;
eine Rückplatte (12), die eine Rückplatten-Innenfläche (14) aufweist;
eine Rolle (20), die rotierbar mit einer Rollenachse (28) gekoppelt ist, gesichert zwischen der Frontplatte (16) und der Rückplatte (12) und radial entlang einer Rollen-Rotationsachse (29) zentriert; **dadurch gekennzeichnet, dass**
die Baumpfleger-Seilrolle ferner eine Vielzahl an Rollensperren (80) umfasst, die sich in entsprechenden Rollensperrenschienen (56) befinden und radial in eine Vielzahl an Sperraufnahmeaussparungen (52) in der Rolle (20) ausfahrbar sind, um eine Rotation der Rolle (20) in Bezug auf die Rollenachse (28) zu verhindern.

2. Baumpfleger-Seilrolle (10) nach Anspruch 1, ferner umfassend einen Rollensperrenschalter (64), der an einen rotierbaren Ringantrieb (73) gekoppelt ist, der sich rund um die Rollenachse (28) herum befindet.

3. Baumpfleger-Seilrolle (10) nach Anspruch 2, ferner umfassend eine Vielzahl an Antriebsgliedern (78), die den Ringantrieb (73) an die Vielzahl an Rollensperren (80) koppeln, wobei jedes der Vielzahl an Antriebsgliedern (78) mit einer entsprechenden der Vielzahl an Rollensperren (80) gekoppelt ist.

4. Baumpfleger-Seilrolle (10) nach einem der Ansprüche 2 oder 3, wobei der Ringantrieb (73) eine im Allgemeinen kreisförmige Außenwand (76) umfasst, die eine Vielzahl an entlang dieser ausgebildeten rampenförmigen Kerben (77) aufweist.

5. Baumpfleger-Seilrolle (10) nach einem der vorhergehenden Ansprüche , wobei die Rolle (20) eine Rollenvorderwand (21) und eine Rollenrückwand (23) beinhaltet und die Vielzahl an Sperraufnahmeaussparungen (52) in Umfangsrichtung beabstandet und an den Umfang der Rollenvorderwand (21) angrenzend angeordnet ist.

6. Baumpfleger-Seilrolle (10) nach einem der vorhergehenden Ansprüche, wobei die Frontplatte (16) einen ringförmigen Vorsprung (58) beinhaltet, der eine runde, aber segmentierte erhöhte Barriere umfasst, die die Rollen-Rotationsachse (29) mindestens teilweise umschließt.

7. Baumpfleger-Seilrolle (10) nach Anspruch 6, wobei der ringförmige Vorsprung (58) eine Vorsprungs-Innenwand (59) beinhaltet, die sich rechtwinklig von der Frontplatten-Innenfläche (18) erstreckt.

8. Baumpfleger-Seilrolle (10) nach Anspruch 7, wobei die Vielzahl an Antriebsgliedern (78) bogenförmig ist und innerhalb der Vorsprungs-Innenwand (59) des ringförmigen Vorsprungs (58) läuft und von dieser geführt wird, wenn der Ringantrieb (73) gedreht wird.

9. Baumpfleger-Seilrolle (10) nach einem der vorhergehenden Ansprüche, wobei jede der Vielzahl an Rollensperren (80) sowohl einen Rollensperren-Vorderteil (84), der in einer entsprechenden der Rollensperrenschienen (56) verbindend aufgenommen und in gleitenden Eingriff genommen wird, und einen Rollensperren-Hinterteil (86), der in einer entsprechenden der Vielzahl Sperraufnahmeaussparungen der Rolle (52) verbindend aufgenommen wird, beinhaltet.

10. Baumpfleger-Seilrolle (10) nach einem der vorhergehenden Ansprüche, wobei die Rollensperrschienen (52) integral als Schlitze in der Frontplatte (16) ausgebildet sind.

11. Baumpfleger-Seilrolle (10) nach einem der vorhergehenden Ansprüche, wobei der Ringantrieb (73) ferner eine kreisförmige Mittelöffnung umfasst, die sich rotierbar (74) über einer kreisförmigen Ringbefestigung (75) befindet, die sich von der Frontplatten-Innenfläche (18) erstreckt, um die Rotation des Ringantriebs (73) um die Rollen-Rotationsachse (29) zu fixieren.

12. Baumpfleger-Seilrolle (10) nach einem der Ansprüche 3 bis 11, direkt oder indirekt abhängig von Anspruch 3, wobei die Vielzahl an Antriebsgliedern (78) nur drei Antriebsglieder beinhaltet und die Vielzahl an Rollensperren (80) nur drei Rollensperren beinhaltet.

13. Baumpfleger-Seilrolle (10) nach einem der Ansprüche 3 bis 12, direkt oder indirekt abhängig von Anspruch 3, wobei jedes der Vielzahl an Antriebsgliedern (78) Stiftöffnungen (82) zum Koppeln jedes der Vielzahl an Antriebsgliedern (78) an den Ringantrieb (73) und zum Koppeln jedes der Vielzahl an Antriebsgliedern (78) an die entsprechenden Rollensperren (80) unter Verwendung einer Vielzahl an Kupplungsstiften beinhaltet.

14. Baumpfleger-Seilrolle (10) nach einem der vorhergehenden Ansprüche, wobei jede der Vielzahl an Rollensperren (80) einen unteren Teil (88) beinhaltet, der bogenförmig ist, um einen Freiraum für den Ringantrieb (73) bereitzustellen, um darunter zu rotieren.

15. Baumpfleger-Seilrolle (10) nach einem der vorhergehenden Ansprüche, ferner umfassend eine drehbare Kausche (38), die durch eine Kauschachse (40) zwischen der Rückplatte (12) und der Frontplatte (16) gesichert ist, wobei sich die Kauschachse (40) oberhalb der Rollenachse (28) befindet und wobei die Kauschachse (40) lösbar gesichert ist.

## Revendications

1. Bloc arboriste (10) comprenant:
une plaque avant (16) ayant une surface intérieure de plaque avant (18) ;
une plaque arrière (12) ayant une surface intérieure de plaque arrière (14) ;
une poulie (20) couplée de manière rotative à un axe de poulie (28) fixé entre la plaque avant (16) et la plaque arrière (12) et centré radialement le long d'un axe de rotation de poulie (29) ; **caractérisé en ce que**
le bloc arboriste comprend en outre une pluralité de verrous de poulie (80) situés dans des pistes de verrouillage de poulie respectives (56) et extensibles radialement dans une pluralité d'évidements de réception de verrou (52) dans la poulie (20) pour empêcher la rotation de la poulie (20) par rapport à l'axe de poulie (28).

2. Bloc arboriste (10) selon la revendication 1, comprenant en outre un interrupteur de verrouillage de poulie (64) couplé à un entraînement à anneau rotatif (73) situé autour de l'axe de poulie (28).

3. Bloc arboriste (10) selon la revendication 2, comprenant en outre une pluralité de liaisons d'entraînement (78) couplant l'entraînement annulaire (73) à la pluralité de verrous de poulie (80), dans lequel chacune de la pluralité de liaisons d'entraînement (78) est couplée à un verrou respectif de la pluralité de verrous de poulie (80).

4. Bloc arboriste (10) selon l'une quelconque des revendications 2 ou 3, dans lequel l'entraînement annulaire (73) comprend une paroi extérieure généralement circulaire (76) comportant une pluralité d'encoches en pente (77) formées le long de celle-ci.

5. Bloc arboriste (10) selon l'une quelconque des revendications précédentes, dans lequel la poulie (20) comprend une paroi avant de poulie (21) et une paroi arrière de poulie (23) et la pluralité d'évidements de réception de verrou (52) sont espacés circonférentiellement et adjacents au périmètre de la paroi avant de poulie (21).

6. Bloc arboriste (10) selon l'une quelconque des revendications précédentes, dans lequel la plaque avant (16) comprend un bossage annulaire (58) comprenant une barrière surélevée circulaire mais segmentée qui entoure au moins partiellement l'axe de rotation de poulie (29).

7. Bloc arboriste (10) selon la revendication 6, dans lequel le bossage annulaire (58) comprend une paroi de bossage interne (59) qui s'étend perpendiculairement à partir de la surface interne de la plaque avant (18).

8. Bloc arboriste (10) selon la revendication 7, dans lequel la pluralité de liaisons d'entraînement (78) sont en forme d'arc et se déplacent à l'intérieur et sont guidées par la paroi de bossage interne (59) du bossage annulaire (58) lorsque l'entraînement annulaire (73) est tourné.

9. Bloc arboriste (10) selon l'une quelconque des revendications précédentes, dans lequel chacun de la pluralité de verrous de poulie (80) comprend à la fois une partie avant de verrou de poulie (84) qui est reçue de manière complémentaire dans et en engagement coulissant avec une piste respective de verrou de poulie (56), et une partie arrière de verrou de poulie (86) qui est reçue de manière complémentaire dans un évidement respective de la pluralité d'évidements de réception de verrou de la poulie (52).

10. Bloc arboriste (10) selon l'une quelconque des revendications précédentes, dans lequel les pistes de verrouillage de poulie (52) sont formées d'un seul tenant sous forme de fentes dans la plaque avant (16).

11. Bloc arboriste (10) selon l'une quelconque des revendications précédentes, dans lequel l'entraînement annulaire (73) comprend en outre une ouverture centrale circulaire rotative (74) située sur un support annulaire circulaire (75) s'étendant depuis la surface intérieure de la plaque avant (18) pour fixer la rotation de l'entraînement annulaire (73) autour de l'axe de rotation de poulie (29).

12. Bloc arboriste (10) selon l'une quelconque des revendications 3 à 11 dépendant directement ou indirectement de la revendication 3, dans lequel la pluralité de liaisons d'entraînement (78) comprend uniquement trois liaisons d'entraînement et la pluralité de verrous de poulie (80) comprend uniquement trois verrous de poulie.

13. Bloc arboriste (10) selon l'une quelconque des revendications 3 à 12 dépendant directement ou indirectement de la revendication 3, dans lequel chacune des multiples liaisons d'entraînement (78) comprend des ouvertures de broche (82) pour coupler chacune des multiples liaisons d'entraînement (78) à l'entraînement annulaire (73) et coupler chacune des multiples liaisons d'entraînement (78) à des verrous de poulie respectifs (80) à l'aide d'une pluralité de broches de couplage.

14. Bloc arboriste (10) selon l'une quelconque des revendications précédentes, dans lequel chacun de la pluralité de verrous de poulie (80) comprend une partie inférieure (88) qui est arquée pour fournir un espace libre pour que l'entraînement annulaire (73) puisse tourner en dessous.

15. Bloc arboriste (10) selon l'une quelconque des revendications précédentes, comprenant en outre un dé à coudre rotatif (38) fixé par un axe de dé à coudre (40) entre la plaque arrière (12) et la plaque avant (16), dans lequel l'axe de dé à coudre (40) est situé au-dessus de l'axe de poulie (28), et dans lequel l'axe de dé à coudre (40) est fixé de manière amovible.
